# EUROPEAN PATENT APPLICATION

(11) **EP 4 302 956 A1**
(43) Date of publication of application: **10.01.2024**
(21) Application number: 22183456.7
(22) Date of filing: 06.07.2022
(51) Int. Cl.: B29B 17/00, B30B 3/00, B30B 9/32, B30B 15/30

(54) **A METHOD AND DEVICE FOR COMPRESSING A MIX OF EMPTY CONTAINERS**

(71) Applicant: Tomra Systems ASA, 1385 Asker (NO)
(72) Inventor: Lien, Lars Krogstad, 0188 Oslo (NO); Storaker, Gjermund, 0279 Oslo (NO); Tytlandsvik, Eivind Nysether, 3070 Sande i Vestfold (NO); Jenter, Holger, 72336 Balingen (DE)
(74) Representative: AWA Sweden AB

(57) **Abstract**

A method and a device are disclosed for compressing a mix of metal cans (10) and plastic bottles (20) between compression rollers (100). A paddle wheel (210) pushes the empty containers towards the compression rollers (100). Each paddle (220) of the paddle wheel (210) has a leading metal can engagement area (230) and a trailing plastic bottle engagement area (240). A peripheral speed ratio (Vr/Vp) between a roller peripheral speed (Vr) and a paddle peripheral speed (Vp) is sufficiently large to ensure that a metal can (10) located in the feed-in area (120) is pushed by the leading can engagement area (230) of the paddle (220) towards the compression roller (100) and pulled at least partly into the compression gap (110) before the trailing plastic bottle engagement area (240) of the paddle (220) has time to engage the metal can (10).

## Description

### TECHNICAL FIELD

The present inventive concept relates to a method and a device for compressing empty containers for use in reverse vending machines. More specifically, the inventive concept is directed to the field of mixed-type reverse vending machines arranged to compress empty containers including a mix of metal cans and plastic bottles.

### BACKGROUND

Reverse vending machines are generally arranged so that a person can return empty containers, and in some cases receive money in return. Reverse vending machines may collect a large number of containers in a short period of time. This means that the reverse vending machine needs to efficiently store the containers so that the storage bin for the processed containers do not need to be replaced too frequently. Therefore, the empty containers are compressed and/or shredded by the reverse vending machine so that they each take up less space.

Since reverse vending machines generally supply money to a person in return to the received containers, they are also subject to fraud. Thus, the reverse vending machine should preferably have a way of marking a container e.g. a bottle or a can such that money is not returned more than once for a single container.

In order to compress and/or shred the returnable containers, the reverse vending machines may typically have an arrangement with rollers which have two main tasks, grabbing the returnable containers and then compressing and/or shredding the containers between the rollers.

Modern mixed reverse vending machines are designed to handle a mix of different empty containers in one single machine, such as a mix of containers made from different materials, e.g. handling a mix of metal cans and plastic bottles in the same machine. A drawback with the mixed reverse vending machines is that the quality of the compressed and/or shredded containers is decreased compared to a machine which is specialized on one kind of empty containers. As a result, the value of the recycled material is decreased as well. A further problem with mixed reverse vending machines is that it is challenging to separate the compressed metal cans from the compressed plastic bottles. This results in an increased workload for the personnel handling the compressed containers.

### SUMMARY OF INVENTION

In the light of the above, it is an object of the present inventive concept to provide a method and a device wherein the above-mentioned disadvantages of the prior art are addressed.

According to a first aspect of the inventive concept, there is provided a method for compressing empty containers including a mix of metal cans and plastic bottles, said method comprising:
rotating a pair of compression rollers in opposite directions, said compression rollers defining a compression gap therebetween and having a feed-in area for receiving empty containers to be pulled in by the compression rollers into said compression gap, and said compression rollers presenting a roller peripheral speed Vr; and
rotating a paddle wheel having one or more paddles in a paddle rotational direction about a rotational axis, each paddle of said one or more paddles having, with respect to the paddle rotational direction, a leading metal can engagement area and a trailing plastic bottle engagement area, said engagement areas being angularly offset from each other with respect to the rotational axis and arranged to push empty containers located in the feed-in area towards the compression rollers, and said paddle having a paddle peripheral speed Vp,
wherein a peripheral speed ratio Vr/Vp between the roller peripheral speed and the paddle peripheral speed is sufficiently large to ensure that a metal can located in said feed-in area is pushed by the leading can engagement area of the paddle towards the compression roller and pulled at least partly into the compression gap before the trailing plastic bottle engagement area of the paddle has time to engage the metal can, and
wherein the plastic bottles are engaged by both the leading can engagement part and the trailing engagement part.

According to a second aspect of the inventive concept, there is provided a device for compressing empty containers including a mix of metal cans and plastic bottles, said device comprising:
a pair of compression rollers defining a compression gap therebetween and having a feed-in area for receiving empty containers to be pulled in by the compression rollers into said compression gap;
a paddle wheel arranged to rotate in a paddle rotational direction about a rotational axis and having one or more paddles, each paddle of said one or more paddles having, with respect to the paddle rotational direction, a leading metal can engagement area and a trailing plastic bottle engagement area, said engagement areas being angularly offset from each other with respect to the rotational axis and arranged to push the empty container located in the feed-in area towards the compression rollers; and
driving means arranged to rotate the compression rollers for obtaining a roller peripheral speed Vr of the compression rollers, and arranged to rotate the paddle wheel in said paddle rotational direction for obtaining a paddle peripheral speed Vp of said one or more paddles, wherein a peripheral speed ratio Vr/Vp between the roller peripheral speed Vr and the paddle peripheral speed Vp is sufficiently large to ensure, during operation of the device, that a metal can located in said feed-in area is pushed by the leading can engagement area of the paddle towards the compression rollers and pulled at least partly into the compression gap before the trailing plastic bottle engagement area of the paddle has time to engage the metal can.

The inventive concept presents at least the following advantages:
A general advantage is that the inventive concept provides a cost and energy efficient way of compressing empty containers including a mix of metal cans and plastic bottles. By combining the compression of metal cans and plastic bottles in the same reverse vending machine, only one is needed. Reverse vending machines are often located in a store where efficient use of the space is of importance. By compressing the mix of empty containers in the same reverse vending machine a space efficient way of handling the waste containers is provided.

Empty containers to be compressed are fed into the device and end up in a feed-in area of the counter-rotating compression rollers. The feed-in area is the area or volume located on the side of the compression rollers where the empty containers are pulled into a compression gap between the compression rollers. The compression rollers may not be able to pull the empty containers into the compression gap by their own rotation only. The paddle wheel is provided to increase the efficiency of the compression operation, and to prevent a queue of empty containers building up in and upstream of the feed-in area. The paddle wheel is rotated to push the empty containers toward the compression rollers, such that the compression rollers may engage the empty containers and pull them into the compression gap.

A specific problem with prior-art mixed machines is that metal cans and plastic bottles may behave differently in the feed-in area above the compression rollers, due to their different properties, different dimensions, etc. Metal cans, on the one hand, should preferably be compressed without being cut or ripped into pieces or fractions. It is an advantage if compressed metal cans downstream the compression rollers are predominantly still in one piece and without sharp edges, since this facilitates the subsequent sorting and the subsequent handling of the compressed material. To this end, the compression rollers may be structured and designed to compress but not to cut or divide the metal cans, to prevent sharp edges and fractions. However, such non-cutting (or less cutting) compression rollers may have an even harder time to pull a mix of empty containers into the compression gap by their own rotation, especially plastic bottles. Plastic bottles, such as PET bottles, on the other hand, are more flexible than metal cans and require a stronger grip and a more efficient engagement by the paddle wheel to be engaged by the compression rollers and pulled into the compression gap. Accordingly, there are to a certain extent opposite requirements for handling metal cans, on the one hand, and plastic bottles, on the other hand: Metal cans should preferably be handled without cutting and ripping by the paddle wheel, whereas plastic bottles normally need a more efficient and forceful grip and engagement by the paddle wheel to be able to be pushed into the compression gap between the compression rollers. Such a more forceful grip and engagement, if applied to the metal cans, may negatively cut or rip metal cans creating sharp edges and frictions. The inventive concept provides a solution to this challenge in that metal cans and plastic bottles are automatically handled differently by the inventive method and device.

The plastic bottle engagement area is constructed and arranged to push the plastic bottles towards the compression rollers with an engagement or grip which is stronger than the paddle wheel engagement for the metal cans. If the plastic bottle engagement area engages the metal cans, the metal cans may be cut and ripped. The inventive concept provides a solution which prevent this more forceful engagement from being applied to the metal cans. The solution includes providing different, angularly offset engagement areas of each paddle of the paddle wheel, designed and arranged to handle metal cans and plastic bottles, respectively, and providing a specific relation between peripheral speeds to the same purpose. To prevent the trailing plastic bottle engagement area of a paddle from engaging a metal can located in the feed-in area, the plastic bottle engagement area is located such that it will pass the compression rollers and the compression gap delayed in time compared to the leading metal can engagement area. Hence, the plastic bottle engagement area will be trailing the leading metal can engagement area. To achieve the delay of the plastic bottle engagement area, the plastic bottle engagement area and the metal can engagement area are angularly offset from each other. The angularly offset results in that the leading metal can engagement area will enter the feed in area and push a metal can into engagement with the compression rollers before the trailing plastic bottle engagement area enters the feed-in area and passes the compression gap. This have the advantage the metal cans are prevented from being cut and ripped into fractions by the trialing plastic bottle engagement area. Plastic bottles, on the other hand, may be pushed efficiently towards the compression rollers both by the leading metal can engagement area and the more gripping plastic bottle engagement area.

A special advantage relates to the recycling quality of the compressed material. The peripheral speeds of the compression rollers and the paddle wheel are selected such that the peripheral speed ratio allows the metal cans located in the feed-in area to be at least partly pulled into the compression gap before the trailing plastic bottle engagement passes into the feed-in area and over the compression gap. The leading metal can engagement area will engage the metal can so the compression rollers are able the engage the metal can. The compression rollers will thereafter pull the metal can into the compression gap, and with a suitable peripheral speed ratio between the paddle peripheral speed and the roller peripheral speed the compression rollers will be able to pull the metal can into the compression gap at least to such an extent that the trailing plastic bottle engagement area of the paddle has no time to engage the metal cans. This results in fewer metal cans being cut and ripped into fractions by the plastic bottle engagement area. The decrease of fractions will improve the quality of the resulting metal material that may be recycled. It will also decrease the loss of fractions. A higher quality of the recycled metal result in a possible higher selling price.

Another advantage with less fragments is that if the metal cans are ripped into fragments, such fragment present sharp edges resulting in that the compressed containers are harder for the personnel to handle. With less sharp edges present, the work environment of the personnel is improved. The sharp edges are also a problem for the labors that recycles the compressed containers. In the mixed reverse vending machine, the metal cans and plastic bottles are mixed in the same tray after compression. To be able to recycle the material, the compressed containers needs to be sorted. The sharp edges may result in that the metal cans and the plastic bottles get caught in each other. With less sharp edges from metal can fractions the separation may be simplified.

A further potential advantage is that the paddle wheel may be designed to provide the additional function to avoid that the compression rollers are fed with too many empty containers at the same time. While the paddle of the paddle wheel starts to push an empty container located in the feed-in area into the compression gap, the feed-in area may be blocked upstream by the paddle wheel for further feed-in of empty containers. The paddles may have a radial extension such that empty containers cannot pass between the feed-in plate and the radially outer paddle end.

The empty containers may be of varying size and shape. The most common is that the plastic bottle has a larger diameter and length than the metal can. Due to their smaller size, metal cans generally end up with an orientation substantially parallel to the compression rollers. In such an orientation, the metal can will not be engaged by the plastic bottle engagement area.

Non-limiting embodiments of the inventive concept are set out in the dependent claims. The features set out in the dependent claims are to be considered as optional features of the inventive concept in its broadest aspect. The features set out in the dependent claims are optional features for both the method and the device according to the inventive concept.

In preferred embodiments, the plastic bottle engagement area is located at a radially outer end of the paddle, and the can engagement area is located radially inwards on the paddle in relation to the plastic bottle engagement area. This arrangement has the advantage that metal cans will be subjected to a smaller pressure towards the compression rollers than the plastic bottles. Thereby, the metal cans will be less squished by the paddle. Such a reduced pressure also has the benefit that the leading metal can engagement area is allowed to move away more easily from a partly pulled-in metal can without cutting it or ripping it into fractions. On the other hand, the trailing plastic bottle engagement area, located at a greater radius, will be able to engage and grip the plastic bottles more efficiently.

The peripheral speed ratio Vr/Vp of the compression rollers and the paddle wheel may be at least 0.8, preferably at least 0.9. An advantage of setting such a lower limit for said peripheral speed ratio is that it ensures that the compression rollers rotate with a relative peripheral speed sufficient for the metal can to be pulled far enough down into the compression gap before the trailing plastic bottle engagement area enters the feed-in area and has time to engage the metal can.

The peripheral speed ratio Vr/Vp of the compression rollers and the paddle wheel is preferably selected in the interval 0.8 to 1.2, and most preferably in the interval 0.9 to 1.1. The upper limit of the intervals has the advantage that the paddle will push the empty containers against the compression rollers in such a way that the output of the reverse vending machine may be optimized. A further advantage is that the risk of over-filling the feed-in area decreases. If the paddle wheel rotates too slow, a user may keep filling the feed-in area with empty containers and when the paddle arrives to the feed-in area the feed-in area may be too full and the paddle wheel or the compression rollers may become stuck. This results in an increased need of personnel for maintenance of the reverse vending machine. The upper speed ratio limit decreases the risk of this kind of happening.

In some embodiments, the metal can engagement area comprises a rounded engagement area presenting a convex engagement surface facing away from the rotational axis of the paddle wheel. This rounded area may form a trailing end of the metal engagement area and may be formed by a curved or bent corner portion of the paddle. This curved or bent corner portion of the paddle may be followed by a trailing portion of the paddle, such that the curved or bent corner portion does not form a protruding gripping edge. An advantage of providing a rounded engagement area as part of the metal can engagement area is that the rounded engagement area may both engage with and become released from the metal cans without cutting them or ripping them into fractions. Such a situation could otherwise occur when the metal cans are pressed against the compression rollers while the metal can engagement area keeps rotating and passes the compression gap before the metal can reached far enough down in the compression gap to not be in contact with the metal can engagement area. Since the metal can is at least partly "locked" in the compression gap while being in engagement with the metal can engagement area, such a rounded engagement area will prevent cutting and ripping. The rounded engagement area of the metal can engagement area may be located radially inwards in relation to the trailing plastic bottle engagement area, with respect to the rotational axis of the paddle wheel.

In preferred embodiments, the metal can engagement area further comprises a planar engagement area having a trailing end which transitions into the rounded engagement area, and having a leading end which is angularly offset from the trailing and is located at a smaller radius than the trailing end. This embodiment has the advantage of providing an increased metal can engagement area, and thereby a longer time, for pushing the metal cans towards the compression rollers. By having a leading end and a trailing end of the straight engagement area, the angle of the force by which the straight engagement area pushes the metal cans towards the compression rollers may be optimized, for instance such that the push force is directed substantially straight into the compression gap.

A trailing end of the rounded engagement area may form an end of the can engagement area. At least a leading part of an extension after the rounded engagement area may also be a part of the metal can engagement area.

The empty containers may be fed into the feed-in area on a feed-in plate, preferably oriented with a slope such the empty containers are moved at least partly by gravity down towards the feed-in area located above the compression rollers.

In preferred embodiments, the peripheral speed ratio Vr/Vp and the angularly offset between the metal can engagement area and the plastic bottle engagement area are selected such that, during operation of the device, plastic bottles are engaged both by the leading metal can engagement area and by the trailing plastic bottle engagement area. In some embodiments, some plastic bottles may be of such a size that also a rotationally trailing paddle may come into engagement with the plastic bottle.

The plastic bottle engagement area may include at least one protruding gripping element which protrudes at least in part in a radially outward direction with respect to the rotational axis and which presents a free grip end arranged to engage the plastic bottles. An advantage of providing at least one protruding gripping element is that the engagement with the plastic bottle will be more efficient. The protruding gripping element may present a gripping edge which may extend over the entire longitudinal length of the compression rollers. The at least one protruding gripping element comprise a plurality of protruding gripping elements, which may form a serrated or toothed structure along the free grip end. The protruding gripping elements may protrude in a direction being at least partly radially outwards such that the free grip end engages the plastic bottle.

In some embodiments, each paddle of said one or more paddles is formed by a single continuous paddle arm, wherein the metal can engagement area and the plastic bottle engagement area of each paddle are formed by different portions of said single paddle arm. In one such single-arm embodiment, the single paddle arm, going in a direction from a radially inner end of the paddle arm to a radially outer end of the paddle arm with respect to the rotational axis, is curved in a first direction towards the paddle rotational direction to define a curved engagement area of the can engagement area, said curved engagement area defining a transition between two substantially planar portions of the paddle arm and presenting a convex engagement surface facing away from the rotational axis, and subsequently curved in a second direction, opposite to the first direction, to form the plastic bottle engagement area at an outer radial end of the paddle arm.

An advantage with having both engagement areas formed by a single paddle arm is that less space is needed for the paddle wheel. This results in a more optimal use of the space in the reverse vending machine. In this embodiment, each single paddle arm is able to provide both of the pushing functions of the paddle. In addition, the continuous design of the single paddle arm may better ensure that empty containers does not get caught in the paddle wheel.

In some embodiments, each paddle may present a leading paddle arm and a trailing paddle arm which are angularly offset from each other, wherein the can engagement area is formed by the leading paddle arm and the plastic bottle engagement is formed by the trailing paddle arm. In this embodiment, the two engagement areas are formed by two paddle arms together forming the paddle. This may present a less complex way of producing the paddle arms to achieve the effects and operations of the metal can engagement area and the plastic bottle engagement area.

According to a further aspect of the inventive concept, there is provided a method for compressing empty containers including a mix of metal cans and plastic bottles, said method comprising:
rotating a pair of compression rollers in opposite directions, said compression rollers defining a compression gap therebetween and having a feed-in area for receiving empty containers to be pulled in by the compression rollers into said compression gap, and said compression rollers presenting a roller peripheral speed Vr; and
rotating a paddle wheel having one or more paddles in a paddle rotational direction about a rotational axis, each paddle of said one or more paddles having, with respect to the paddle rotational direction, a leading metal can engagement area and a trailing plastic bottle engagement area, said engagement areas being angularly offset from each other with respect to the rotational axis and arranged to push empty containers located in the feed-in area towards the compression rollers, and said paddle having a paddle peripheral speed Vp,
wherein a peripheral speed ratio Vr/Vp between the roller peripheral speed and the paddle peripheral speed is at least 0,8, preferably at least 0,9. In preferred embodiments, the peripheral speed ratio Vr/Vp is selected in the interval 0,8 to 1,2, preferably in the interval 0,9 to 1,1.

The inventors have found that a peripheral speed ratio Vr/Vp in accordance with the above value may be sufficiently large to ensure that a majority of metals cans located in said feed-in area are pushed by the leading can engagement area of the paddle towards the compression roller and pulled at least partly into the compression gap before the trailing plastic bottle engagement area of the paddle has time to engage the metal cans, while the plastic bottles are engaged by both the leading can engagement part and the trailing engagement part.

A similar device including driving means may also be provided in accordance with this further aspect.

Optional features set out in the dependent claims relating to the first and the second aspect above of the invention apply to this further aspect also.

### BRIEF DESCRIPTION OF THE DRAWINGS

The inventive concept, some non-limiting embodiments, and further advantages of the inventive concept will now be described with reference to the drawings in which:
- Fig. 1a: is a side view of a first embodiment of a device for compressing a mix of empty containers.
- Fig. 1b: is a perspective view of the first embodiment.
- Fig. 1c: corresponds to Fig. 1a, and is provided with length and angle reference numerals.
- Fig. 2a-2c: illustrate handling of a metal can according to the first embodiment.
- Fig. 3: is a perspective view of a metal can in a device according to the first embodiment.
- Fig. 4a-4c: illustrate handling of a plastic bottle according to the first embodiment.
- Fig. 5a: is a side view of a device according to a second embodiment.
- Fig. 5b: is a perspective view of the second embodiment.
- Fig. 6a: is a side view of a device according to a third embodiment.
- Fig. 6b: is a perspective view of the third embodiment.

### DETAILED DESCRIPTION OF PREFERRED EMBODIMENTS

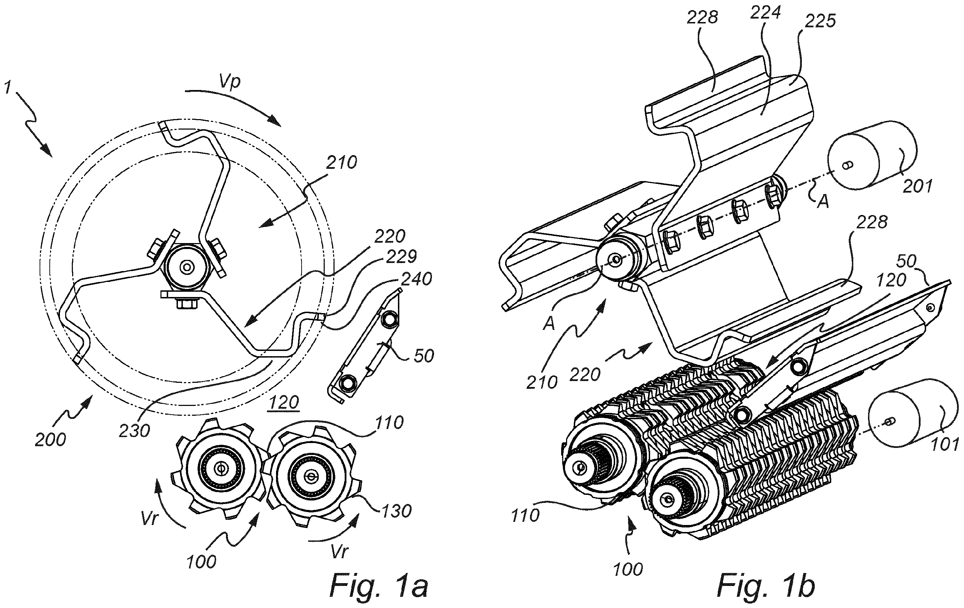

Fig. 1a-1c illustrate an embodiment of a device 1 for compressing empty containers 5 including a mix of metal cans 10 and plastic bottles 20. In use, the device 1 may form part of a reverse vending machine of mixed type. Devices and methods according to the inventive concept are designed to handle at least a mix of metal cans and plastic bottles, but may also be designed to handle additional types of empty containers, such as empty Tetra containers.

The device 1 in Figs 1a-1c presents two main units: a pair of compression rollers 100 and a paddle unit 200. The compression rollers 100 define a compression gap 110 therebetween.

Driving means 101 and 201 are arranged to rotate the compression rollers 100 in opposite directions and to rotate the paddle wheel 210, respectively. The driving means 101 and 102 may be separate driving means, or a common driving means drivingly connected to both the compression rollers 100 and the paddle wheel 210. The driving means may typically include one or more electric motors. The compression rollers 100 are rotated by a speed to obtain a roller peripheral speed Vr, and the paddle wheel is rotated by a speed to obtain a paddle peripheral speed Vp. The term peripheral speed refers to the speed of radially outermost portions of the rollers and the paddles, respectively.

The compression rollers 100 are rotated in opposite directions to form a feed-in area 120 at the upper side of the rollers 100 above the compression gap 110. Empty containers 5 are received in the feed-in area 120 and pulled into the compression gap 110 by the rotating compression rollers 100. Each compression roller 100 may comprise one or a plurality of protruding parts 130 distributed over its periphery. The protruding parts 130 are arranged to grip and compress the empty container 5. The protruding parts 130 of the two compression rollers 100 may be arranged in a meshed relation in the compression gap 100 or in a face-to-face relation. The protruding parts 130 may be dull or sharp. In preferred embodiments of the inventive concept, the compression rollers 100 may be structured and designed to compress metal cans without cutting them into fractions. This may be provided by using dull or less sharp protruding parts 130 on the compression rollers 100.

In the illustrated embodiments, the empty containers 5 are fed into the device 1 on an inclined feed-in plate 50, to be transported by gravity and/or by the paddle wheel 200 into the feed-in area 120 of the compression rollers 100. As previously mentioned, an empty container 5 present in the feed-in area 120 may have a hard time to be pulled into the compression gap 110 solely under influence of the rotating compression rollers 100. To enhance the pull-in operation and to prevent queueing up of empty containers 5 in the feed-in area 120, the device 100 is provided with the rotating paddle wheel 210 arranged above the compression rollers 100 at a distance therefrom. The paddle wheel 210 is structured and arranged to engage empty containers 5 and push them towards the compression rollers 100. Depending on the machine design and/or the dimensions of the empty containers 5, the paddles 220 of the paddle wheel 210 may engage the empty containers 5 both before and after they reach the feed-in area 120. In the illustrated embodiments, the metal cans are predominantly received in the feed-in area 120 before being engaged and pushed by the paddle wheel 210.

The paddle wheel 210 is rotated in a paddle rotational direction towards the right infeed side in the figures about a rotational axis A of the paddle wheel 210. The paddle wheel 210 in the illustrated embodiment has three circumferentially distributed paddles 220. Other embodiments may have a different number of paddles 220, including embodiments with one paddle only. Each paddle 220 has, with respect to the paddle rotational direction, a leading metal can engagement area 230 and a trailing plastic bottle engagement area 240. The engagement areas 230, 240 are angularly offset from each other with respect to the rotational axis A and are structured and arranged to push the empty containers 5 against the compression rollers 100. The driving means 201 is arranged to rotate the paddle wheel 210 in said paddle rotational direction for obtaining a paddle peripheral speed of said one or more paddles, termed Vp. The rotational axis A of the paddle wheel 210 is parallel to the rotational axis of the compression rollers 100. In the illustrated embodiment, the rotational axis A of the paddle wheel 210 is laterally offset (to the left in the figures) in relation to the compression gap 110. The paddle wheel 210 rotates and pushes the empty containers 5 towards the compression rollers 100 which gives enough pressure for the compression rollers 100 to engage the empty containers 5.

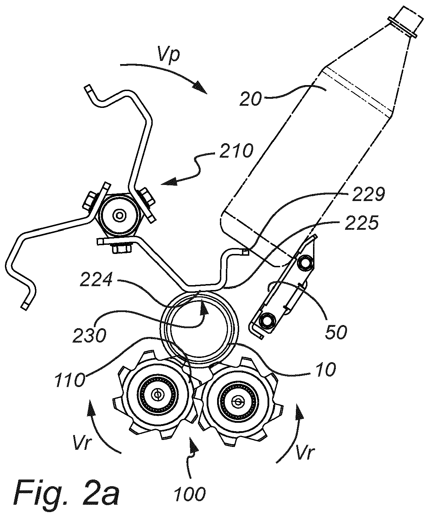

The empty containers 5 may be of varying size and of different materials. For instance, plastic bottles 20 may have a larger diameter and greater length than metal cans 10. The differences in size and material of the empty containers 5 is why each paddle 220 is provided with two engagement areas, the leading metal can engagement area 230 and the trailing plastic bottle engagement area 240. The plastic bottle engagement area 240 is structured and arranged to engage the plastic bottles 20 with a stronger engagement than the engagement required for the metal cans 10. If the plastic bottle engagement area 240 engages the metal cans 10, the metal cans 10 may be ripped into fractions. To prevent the plastic bottle engagement area 240 from engaging the metal cans 10, the plastic bottle engagement area 240 is structured and arranged such that it will pass the infeed-area 120 and the compression gap 110 delayed in time compared to the leading metal can engagement area 230. Hence, the plastic bottle engagement area 240 will be trailing the leading metal can engagement area 230. To achieve the delay of the plastic bottle engagement area 240 is angularly offset (α1, α2) in relation to the metal can engagement area 230. Due to their smaller size, the metal cans 10 will predominantly be oriented essentially lying down in the feed-in area 120 as illustrated in Fig. 2a.

To ensure that the plastic bottle engagement areas 240 of the paddles 220 are prevented from engaging and ripping the metal cans 10, a peripheral speed ratio Vr/Vp between the roller peripheral speed Vr and the paddle peripheral speed Vp is selected sufficiently large to ensure that a metal can 10 located in the feed-in area 120 is pushed by the leading can engagement area 230 of a paddle 220 towards the compression rollers 100 and pulled at least partly into the compression gap 110 before the trailing plastic bottle engagement area 240 of the same paddle 220 has time to engage the metal can 10. In preferred embodiments, the peripheral speed ratio Vr/Vp is set to at least 0.8, and preferably to at least 0.9, such that the peripheral speed of the compression rollers 100 is sufficient high to ensure that a metal can 10 is pulled far enough down in the compression gap 110 before the trailing plastic bottle engagement area 240 has time to engage the metal can 10. Instead, the trailing plastic bottle engagement area 240 will pass the feed-in area 120 and the rollers 100 without touching the metal can 10, or at least without substantially engaging, gripping and fractioning the metal can 10. With an upper limit for the speed ratio Vr/Vp selected to at most 1.2, more preferably to at most 1.1, the paddle 220 will push the empty containers 5 against the compression rollers 100 in such a way that the output of the reverse vending machine may be optimized. A further advantage is that the risk of filling the feed-in area 120 with too many empty containers 5 decreases.

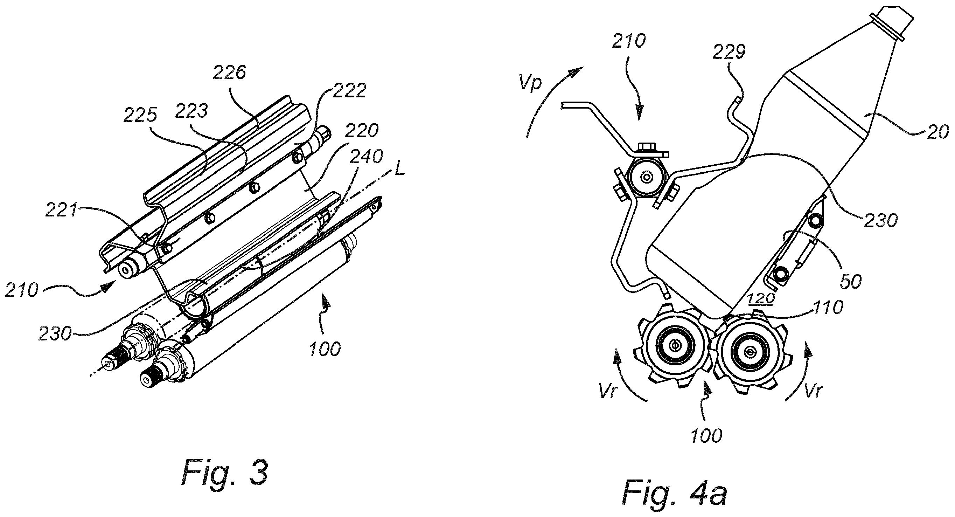

The operation of the metal can engagement area 230 in connection with an empty container 5 will be further described below with reference to Figs 2a-2c. How the plastic bottle engagement area 240 operates in connection with an empty container 5 will be further described below with reference to Figs 4a-4c.

In the illustrated embodiment, the empty containers 5 are fed towards the feed-in area 120 of the compression rollers 100 at least partly by gravity along a feed-in plate 50. For some situations, designs and container dimensions, an empty container 5 is fed by gravitation only to a position where the container is resting on one or both compression rollers 100 before being engaged and pushed by the paddle wheel 210. For some situations, designs and container dimensions, an empty container 5 is initially fed by gravitation on the feed-in plate 50 and is engaged by the paddle wheel 210 earlier at a higher position, before contacting the compression rollers 100, wherein the final feed of the empty container 5 is performed by the paddle wheel 210.

The perspective view in Fig. 1b provides an overview of the shapes and arrangement of the different components of the device 1. The compression rollers 100 and the paddles 220 extend parallel to the rotational axis A. The length of the compression rollers 100 and the length of the paddles 200 in the direction of the rotational axis A may vary. In some embodiments, the length may be sufficient to allow multiple empty containers 5 distributed in the direction of the axis A to be received and handled simultaneously in the feed-in area 120 and by the compression rollers 100.

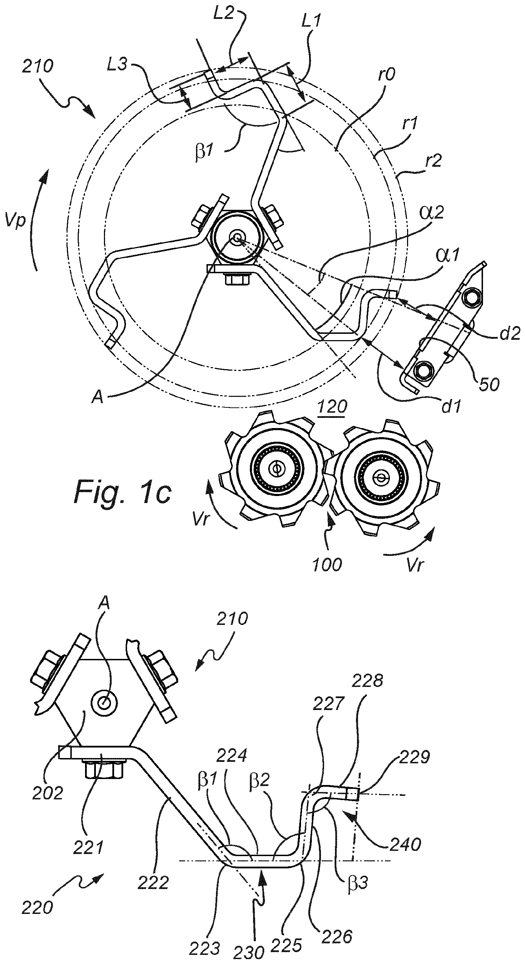

The metal engagement area 230 and the plastic bottle engagement area 240 of each paddle 220 will now be further described with reference to of Figs 1a-1c. In the illustrated embodiment, the metal can engagement area 230 of each paddle 220 is located radially inwards in relation to the plastic bottle engagement area 230, with respect to the rotational axis A. As shown in Fig. 1c, the leading metal can engagement area 230 is located at a first radius r1, and the trailing plastic bottle engagement area 240 is located at a second radius r2, larger than the first radius r1. As a result of the metal can engagement area 230 being located radially inwards in relation to the trailing plastic bottle engagement area 240, the empty containers 5 will be subjected to a smaller pressure by the metal can engagement area 230 than the plastic bottle engagement area 240. Since the metal cans 10 are engaged by the leading metal can engagement area 230 only, the design results in that the metal cans 10 are subjected to a lower pressure while being pushed towards the compression rollers 100, compared to the plastic bottles 20 which will be gripped harder by the trailing engagement area 240 and deformed to a larger degree before being pulled into the compression gap 110.

In the first embodiment illustrated in Figs. 1a-1c, each paddle 220 is formed by a single paddle arm presenting both the metal can engagement area 230 and the plastic bottle engagement area 240. As shown in Fig. 1b, the paddle 220 may be formed by a continuous planar element curved or bent along certain lines to define different portions of the paddle 220. As an example, the paddle 220 may be made from a bent metal material, or by a molded rigid material. Each paddle arm 220 is secured to a rotationally driven center axle 202 of the paddle wheel 210 rotatable about the rotational axis A. Each paddle 220 extends from an inner end 221 attached to the axle 202 to a radially outer paddle end 229 located at the radius r2.

In the first embodiment illustrated in Figs 1a-1c, each paddle 220 comprises, as seen in the cross-sectional view in Fig. 1a and starting from the inner end 221 and out, a first straight portion 222, a first corner portion 223 at a radius r0, a second straight portion 224, a second corner portion 225 at a radius r1>r0, a third straight portion 226, a third corner portion 227, and a protruding end portion 228 extending to the radially outer paddle end 229 at radius r2>r1.

The first straight portion 222 forms an angle with the inner end portion 221 extends from the inner paddle end 221 substantially along a radial direction to the first corner portion corner 223 located at radius r0. From the first corner portion 223, the second straight portion 224 extends by an angle β1 in relation to the first straight portion 221, in a more rearward direction with respect to the rotational direction, up to the second corner portion 225 at radius r1. As indicated in the figures, the second corner portion 225 is angularly offset in a trailing or rotationally backward direction in relation to the first corner portion 223. At the second corner portion 225 at radius r1, the second straight portion 224 transitions to the third straight portion 227. The third straight portion 227 extends by an angle β2 in relation to the second straight portion 224, in an even more rearward direction with respect to the rotational direction, up to the third corner portion 227. At the third corner portion 227, the paddle arm 220 is bent or curved in an opposite (radially outward) bending direction compared to the bending direction at the second corner portion 225, thereby forming the protruding end portion 228 of the paddle 220. The protruding end portion 228 extends at an angle β3 in relation to the third straight portion 226, and extends preferably at least partly in a radial direction with respect to the rotational axis A to form a gripping radially outer end 229 of the paddle 220 at radius r2. The outer radially free paddle end 229 is angularly offset by an angle α1 with respect to the first corner portion 223 and by an angle α2<α1 in relation to the second corner portion 225.

In the first embodiment shown in Figs 1a-1c, the metal can engagement area 230 is formed by the second straight portion 224, forming a leading engagement area, in combination with the second corner portion 225, forming a trailing rounded, convex engagement area. The operation of these combined engagement areas for handling of metal cans 10 is illustrated in Figs 2a-2c. In the illustrated embodiment, the plastic bottle engagement area 240 is formed by the protruding end portion 228 of the paddle 220. The combined operation of engagement areas 230 and 240 for handling plastic bottles 20 is illustrated in Figs 4a-4c. In other embodiments, one or more protruding gripping elements (not shown), such as pins/spikes, irregularities, may be formed at a distance from the radially outer paddle end 229 to form at least part of the plastic bottle engagement area 240.

The rounded engagement area at the corner portion 225 may be released from a metal can 10 without cutting it or ripping it into fractions. The leading end at corner 223 of the straight portion 224 forms a start of the can engagement area 230, and the trailing end of the rounded corner portion 225 forms an end of the can engagement area 230. Especially, the can engagement area 230 is free of protruding elements, sharp edges or free paddle ends that may rip the metal cans. Since the two ends of the straight portion 224 at the corners 223, 225 are angularly offset from each other, it follows that the angularly offset of the metal can engagement area 230 in relation to the plastic bottle engagement area 240 varies between α2 (start of 230) to α1 (end of 230).

As may be understood from the angular offset α1- α2 between the leading end (at 223) and the trailing end (at 225) of the straight portion 224 forming a planar engagement area, the planar engagement area formed by this straight portion 224 is not extending in a radially direction with respect to the rotational axis A, but rather in a rearward inclined direction with respect to the rotational direction. As a result, as shown in Fig. 2a, the straight portion 224 forms an advantageous extended or increased area for pushing the metal cans 10 towards the compression rollers 100, while the trailing rounded corner 225 forms a curved release area reducing the risk of ripping, and may present an inclination to achieve an optimal direction of the push force of the containers 5 towards the compression gap 110. In an alternative embodiment, the portion 224 may have a slightly curved (convex) design or shape, while still presenting a leading end (at 223) and a trailing end (at 225).

The angular offsets and lengths of the different portions of the paddle 220 are such that the free space or distance between the feed-in plate 50 and the paddle 220 differs depending on which portion of the paddle 220 that passes in front of the feed-in plate 50. The metal can engagement area 230 extending to radius r1 will pass at a first distance d1 from the feed-in plate 50. The plastic bottle engagement area 240 extending to radius r2>r1 will pass at a smaller distance d2<d1 from the feed-in plate 50. The distances d1 and d2 may be adapted such that the paddle wheel 210 has the double function of both providing the required push on the empty container, and providing a blocking function preventing more than one container to reach the feed-in area 210 at a time. Accordingly, when a paddle 220 of the paddle wheel 210 starts to push an empty metal can 10 located in the feed-in area 120 into the compression rollers 100, the feed-in area 120 will be "closed" by the same paddle 220. The paddles 220 may thus have a radial extension r2 such that no empty containers 5 can pass between the feed-in plate 50 and the outer paddle end 229.

As a non-limiting example, the following values may apply to an embodiment as shown in Figs 1a-1c:

| | |
|---|---|
| - α1 (angular offset 229/223) | 20°- 40°, preferably around 30° |
| - α2 (angular offset 229/225) | 10°-15°, preferably around 13° |
| - β1 (angle at 223) | 40°-60°, preferably around 50° |
| - β2 (angle at 225) | 85°- 105°, preferably around 95° |
| - β3 (angle at 227) | 80°- 110°, preferably around 90° |
| - L1 (length of 224) | 27 mm |
| - L2 (length of 226) | 30 mm |
| - L3 (length of 228) | 18 mm |
| - d1 (distance R1/50) | 28 mm |
| - d2 (distance R2/50) | 35 mm |

Turning now to Figs 2a-2c and Fig. 3, a sequence for compressing a metal can 10 will now be described. In an initial state shown in Fig. 2a and Fig. 3, a metal can 10 has been fed by gravity along the feed-in plate 50 into the feed-in area 120. The metal can 10 is in contact with but not yet engaged by the compression rollers 100. The metal can 10 in the illustrated example is oriented with its longitudinal direction parallel to the compression rollers 100. Other orientations are possible. In Fig. 2a, the paddle wheel 220 has been rotated to a rotational position where the metal can engagement area 230 has just started its engagement with the metal can 10 and starts pushing on the can 10. The planar engagement area formed by the straight paddle portion 224 has been rotated to engagement with the upper part of the metal can 10, pushing the metal can 10 located in the feed-in area 120 towards the compression gap 110 between the compression rollers 100 in order for the can 10 to be gripped by the compression rollers 100. The situation shown in Fig. 2a illustrates the benefit of selecting a suitable angular orientation of the straight portion 224, such that its planar engagement area pushes the metal can 10 in a suitable direction towards the compression rollers 100 and the compression gap 110. As an example, a geometrical normal direction of the planar engagement area at portion 224 may be essentially perpendicular to a geometrical plane defined by the rotational axes of the two compression rollers 100. Due to the angular offset α1 and α2, the trailing plastic bottle engagement area 240 is prevented from engaging the metal can 10.

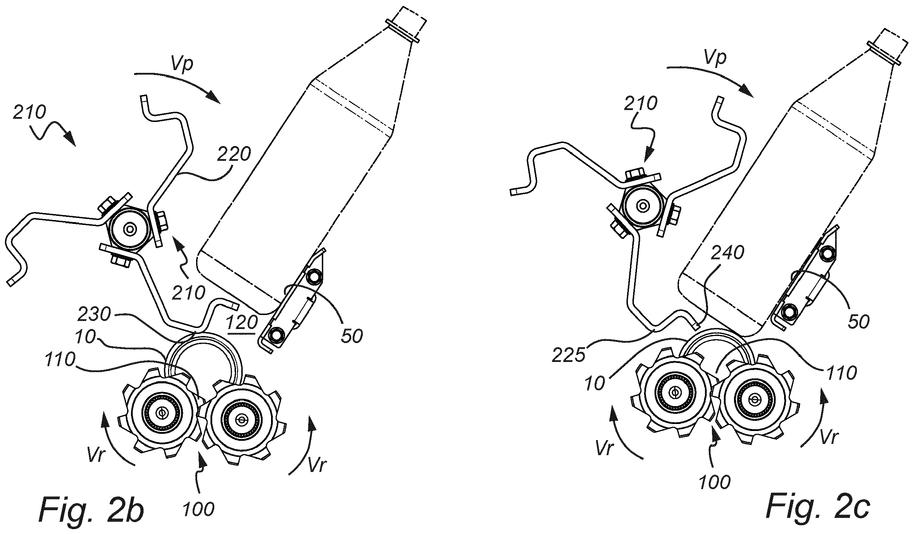

With reference now to Fig. 2b, the paddle wheel 210 has rotated, resulting in the paddle 220 pushing the metal can 10 towards the compression rollers 110. In the rotational position of the paddle wheel 210 shown in Fig. 2b, the metal can 10 has been pulled partly into the compression gap 110 and is starting to become compressed by the compression rollers. When the compression rollers 100 have started their engagement with the metal can 10, the compression rollers 100 will pull the metal can 10 further down in the compression gap 110 through the rotation of the compression rollers 100. In fig. 2b, the metal can engagement area 230 is at its final end regarding its engagement with the metal can 10. The planar engagement area of portion 224 is no longer in engagement with the metal can 10, and the trailing part of the metal can engagement area 230, the rounded engagement area at corner portion 225, is in engagement with the metal can 10. The rounded engagement area at corner portion 225 pushes the metal can 10 as the metal can 10 is compressed by the compression rollers 100. The rounded engagement area 225 has soft transition due to it being rounded which will not grip into the metal can 10. The rounded engagement area 225 will therefore slip off the metal can 10 without ripping it to fractions. The peripheral speed ratio Vr/Vp between the compression rollers 100 and the paddles 220 is preferably selected such that the peripheral speed Vr of the compression rollers 100 is large enough to ensure that the metal can 10 is compressed by the compression rollers 100 in a pace adapted to the pushing speed of the metal can engagement area 230, corresponding to the paddle peripheral speed Vp.

Fig. 2c illustrates an even later rotational position of the paddle wheel 220. The metal can engagement area 230 is no longer in engagement with the metal can 10. The plastic bottle engagement area 240 is now in a rotational position where it would have been able to be in engagement with the metal can 10, if the latter would still be present in the feed-in area 110. However, in the situation in Fig. 2c the metal can 10 has been pulled down far enough into the compression gap 110 by the compression rollers 100 to not be engaged by the plastic bottle engagement area 240. As mentioned above if the plastic bottle engagement area 240 would make contact with the metal can 10, there is a risk that the metal can 10 will be ripped into fractions. To enable the compression rollers 100 to pull the metal can 10 far enough down into the compression gap 110, the plastic bottle engagement area 240 has the above-described angular offset, and the peripheral speed ratio Vr/Vp is adapted to let the compression rollers 100 rotate fast enough in relation to the peripheral speed of the paddles 220 to pull the metal can 10 down into the compression gap 110 fast enough to avoid engagement with the plastic bottle engagement area 240.

Turning now to Fig. 4a-4c, a corresponding sequence for compressing a plastic bottle 20 is illustrated. In Fig. 4a, a plastic bottle 20 with larger dimensions than the metal can 10, for instance a 1,5 liter PET bottle, has been fed on the feed-in plate 50 to the feed-in area 120 and is situated with a longitudinal direction 21 of the plastic bottle 20 oriented transverse to the compression rollers 100, i.e. a standing orientation. The plastic bottle 20 in Fig. 4a is initially engaged by the leading metal can engagement area 230. The elasticity of the plastic bottle 20 results in that the metal can engagement area 230 elastically deforms the plastic bottle 20. The metal can engagement area 230 pushes the plastic bottle toward the compression gap 110, but the engagement with the metal can engagement area 230 may not be strong enough by itself for the plastic bottle 20 to come into a pull-in engagement with the compression rollers 100.

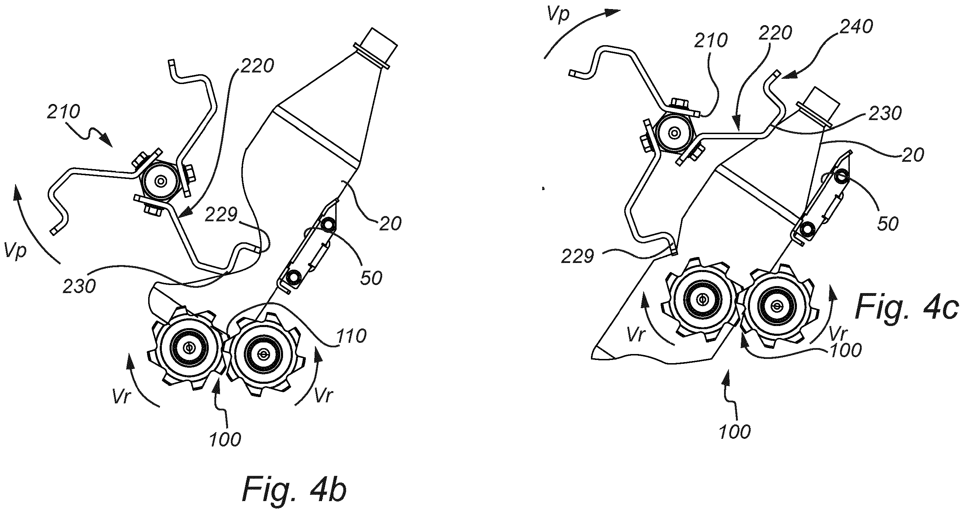

In Fig. 4b, the paddle 220 has rotated further. The plastic bottle engagement area 240 has now come to engagement with the plastic bottle 20, and the metal can engagement area 230 is still in engagement with the plastic bottle 20. Especially, the gripping protruding end portion 228 of the paddle 220 effectively engages the plastic bottle 20, pre-compressing it locally to the smaller distance d2 in relation to the feed-in plate 50. This more substantial pre-deformation of the plastic bottle 20 ensures a positive push towards the compression rollers 100.

In some embodiments, both engagement areas 230, 240 may be in engagement with the plastic bottle at the same time. This may be achieved by selecting the peripheral speed ratio Vr/Vp and the angularly offset between the metal can engagement area 230 and the plastic bottle engagement area 240 such that, during operation of the device 1, the plastic bottles 20 are engaged both by the leading metal can engagement area 230 and by the trailing plastic bottle engagement area 240. However, at least the plastic bottle engagement area 240 should be in engagement with the plastic bottle 20, and the protruding gripping element 228 with its free paddle grip end 229 is gripping the plastic bottle 20 and pushes it effectively towards the compression gap 110. Thus, the two engagement areas 230 and 240 together pushes the plastic bottle into a pull-in engagement with the compression rollers 100. When the compression rollers 100 has been brought in engagement with the plastic bottle 20 they will pull the plastic bottle 20 down into the compression gap 110 as shown in Fig. 4b.

As the rotation of the paddle wheel 210 continues, the metal can engagement area 230 eventually loses its engagement with the plastic bottle 20 as shown in Fig. 4c where the plastic bottle engagement area 240 of the paddle 220 is still in engagement with the plastic bottle 20. The plastic bottle 20 is partly pulled into in the compression gap 110 and is being compressed by the compression rollers 100. When the plastic bottle 20 has a longitudinal extension extending the angularly offset between two adjacent paddles 220 of the paddle wheel 210, a trailing paddle 220 and its metal can engagement area 230 may also come in engagement with the plastic bottle 20 during the final handling of the plastic bottle 20. This facilitate the pushing effect from the paddle wheel 210 on the plastic bottle 20.

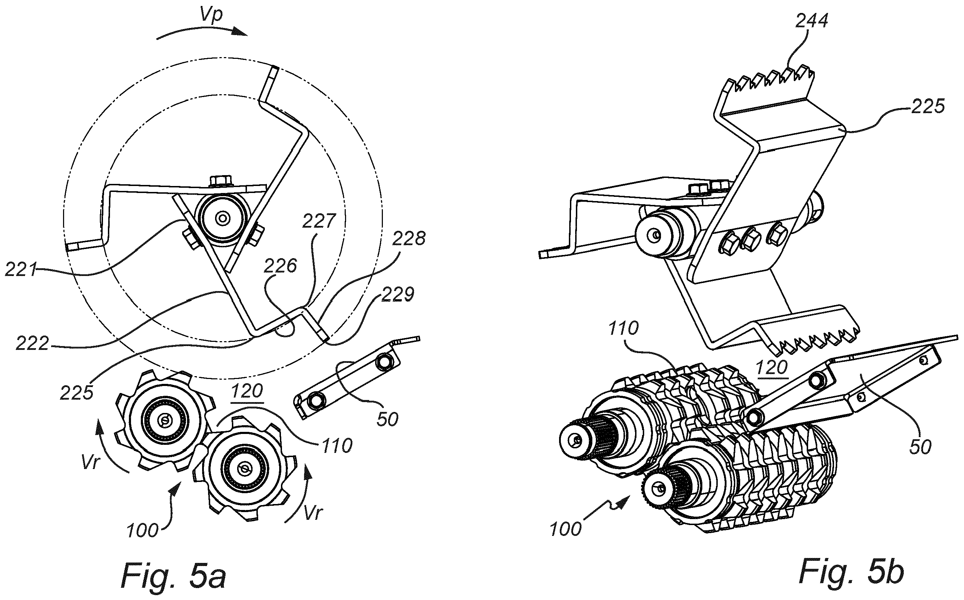

Turning now to Fig. 5a and 5b, a second embodiment of the paddle wheel 210 is illustrated. To facilitate the description, like parts in the first and the second embodiments are indicated by the same reference numbers. Operations, values, speed ratio considerations, and alternatives stated in connection with the first embodiment apply to the second embodiment also. The compression rollers 100 have been described above in connection with the first embodiment and are not changed. The paddle wheel 210 comprises also three paddles 220, wherein each paddle 220 has a metal can engagement area 230 and a plastic bottle engagement area 240. As in the first embodiment, each paddle 220 in the second embodiment is also is formed by a single continuous paddle arm 220, wherein the metal can engagement area 230 and the plastic bottle engagement area 240 of each paddle 220 are formed by different portions of said single paddle arm 220.

The second embodiment in Figs 5a and 5b differs from the first embodiment with respect to the metal can engagement area 230. In the first embodiment, the metal can engagement area 230 is formed by the straight portion 224 and the rounded corner portion 225 in combination. In the second embodiment, the metal can engagement area 230 is formed by the rounded corner portion 225 only. Also, the straight portion 222 extends essentially in line with the inner end portion 221.

The plastic bottle engagement area 240 is located at a radially outer end of the paddle 220, and the can engagement area 230 is located radially inwards on the paddle 220 in relation to the plastic bottle engagement area 240. The plastic bottle engagement area 240 includes a plurality of protruding gripping elements 244 which are arranged at the radially outer paddle end 229 and which protrude at least in part in a radially outward direction with respect to the rotational axis A. The metal can engagement area 230 is formed by the rounded corner portion 225 only. The straight portion 224 and the corner portion 223 are dispensed with, and the first straight portion 222 extends directly to the corner portion 225 forming the metal can engagement area 230. The radial and angular positions of the remaining portions of the paddle 220 may be the same as in the first embodiment.

Other embodiments of the paddle wheel 210 may include any variation with respect to the length of the straight portion 224. A different length of the straight portion 224 may give a different angular offset for the metal can engagement area 230. A longer straight portion 224 may for example provide a larger area for pushing the metal cans 10 during a longer time period.

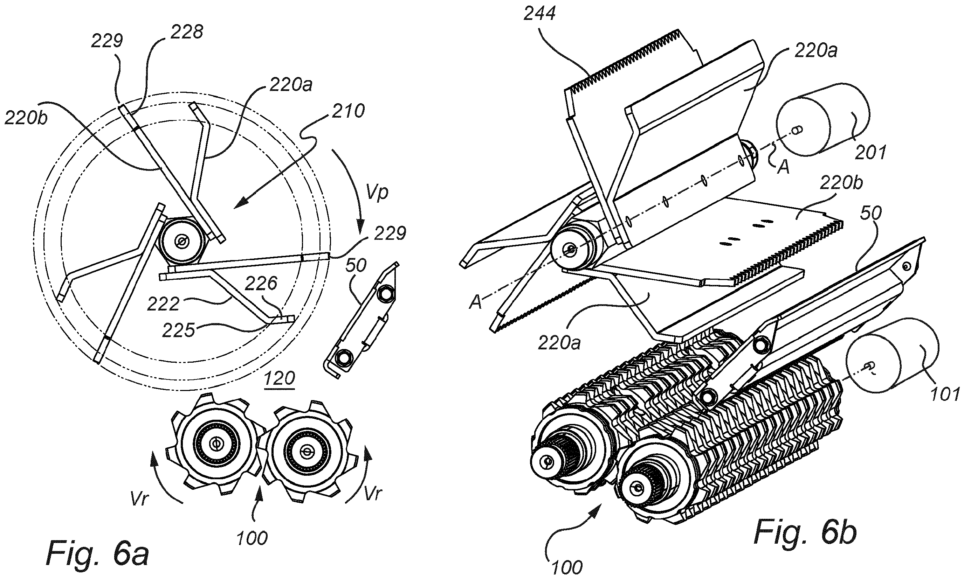

Turning now to Fig. 6a and 6b, a third embodiment of the paddle wheel 210 is illustrated. To facilitate the description, like parts in the first, second, and third embodiments are indicated by the same reference numbers. Operations, values, speed ratio considerations, and alternatives stated in connection with the first embodiment apply to the third embodiment also. The compression rollers 100 have been described above in connection with the first embodiment and are not changed. The paddle wheel 210 comprises also three paddles 220, wherein each paddle 220 has a metal can engagement area 230 and a plastic bottle engagement area 240.

The third embodiment in Figs 6a and 6b differs from the first and second embodiments with respect to the paddles 220 and the arrangement of the engagement areas 230 and 240. The paddle wheel 210 comprises three paddles 220, wherein each paddle 220 comprises two angularly offset paddle branches or paddle arms 220a and 220b. More specifically, each paddle 220 comprises a leading paddle arm 220a and a trailing paddle arm 220b which are angularly offset from each other. In the present disclosure, the two paddle arms 220a and 220b together form a paddle 220 of the paddle wheel 210. The angularly offset may be limited to avoid empty containers being caught between the paddle arms 220a, 220b. Optionally, the paddle 220 may be provided with means between the paddle arms 220a, 220b preventing empty containers being caught between the paddle arms.

The metal can engagement area 230 is formed by portions of the leading paddle arm 220a, whereas the plastic bottle engagement area 240 is formed by portions of the trailing paddle arm 220b. The trailing paddle arm 220b extends radially from the rotation axis A of the paddle wheel 210. In the illustrated embodiment, the plastic bottle engagement area 240 is formed by a radially outer end portion 228 of the paddle arm 220b, including the outer gripping edge 229. The radially inner can engagement area 230 is formed by a corner portion 225 of the leading paddle arm 220a and is, as in the previous embodiments, located radially inwards at a radius 1 in relation to the plastic bottle engagement area 640 located at a large radius r2>r1.

The person skilled in the art realizes that the present disclosure by no means is limited to the preferred embodiments described above. On the contrary, many modifications and variations are possible within the scope of the appended claims. Additionally, variations to the disclosed embodiments can be understood and effected by the skilled person in practicing the claimed invention, from a study of the drawings, the disclosure, and the appended claims.

## Claims

1. A method for compressing empty containers including a mix of metal cans (10) and plastic bottles (20), said method comprising:
rotating a pair of compression rollers (100) in opposite directions, said compression rollers defining a compression gap (110) therebetween and having a feed-in area (120) for receiving empty containers to be pulled in by the compression rollers (100) into said compression gap (110), and said compression rollers (100) presenting a roller peripheral speed (Vr); and
rotating a paddle wheel (210) having one or more paddles (220) in a paddle rotational direction about a rotational axis (A), each paddle (220) of said one or more paddles (220) having, with respect to the paddle rotational direction, a leading metal can engagement area (230) and a trailing plastic bottle engagement area (240), said engagement areas being angularly offset (α1, α2) from each other with respect to the rotational axis (A) and arranged to push empty containers located in the feed-in area (120) towards the compression rollers (100), and said paddle (220) having a paddle peripheral speed (Vp),
wherein a peripheral speed ratio (Vr/Vp) between the roller peripheral speed (Vr) and the paddle peripheral speed (Vp) is sufficiently large to ensure that a metal can (10) located in said feed-in area (120) is pushed by the leading can engagement area (230) of the paddle (220) towards the compression roller (100) and pulled at least partly into the compression gap (110) before the trailing plastic bottle engagement area (240) of the paddle (220) has time to engage the metal can (10), and
wherein the plastic bottles (20) are engaged by both the leading can engagement part (230) and the trailing engagement part (240).

2. The method according to claim 1, wherein the plastic bottle engagement area (240) is located at a radially outer end (229) of the paddle (220), and the can engagement area (230) is located radially inwards on the paddle (220) in relation to the plastic bottle engagement area (240).

3. The method according to claim 1, wherein said peripheral speed ratio (Vr/Vp) is at least 0,8, preferably at least 0,9.

4. The method according to claim 3, wherein said peripheral speed ratio (Vr/Vp) is selected in the interval 0,8 to 1,2, preferably in the interval 0,9 to 1,1.

5. The method according to any one of the preceding claims, further comprising feeding the empty containers (5) to the feed-in area (120) of the compression rollers (100) at least by gravity.

6. The method according to any of the preceding claims, wherein the method is performed by a device as claimed in any of the device claims.

7. A device (1) for compressing empty containers (5) including a mix of metal cans (10) and plastic bottles (20), said device (1) comprising:
a pair of compression rollers (100) defining a compression gap (110) therebetween and having a feed-in area (120) for receiving empty containers (5) to be pulled in by the compression rollers (100) into said compression gap (110);
a paddle wheel (210) arranged to rotate in a paddle rotational direction about a rotational axis (A) and having one or more paddles (220), each paddle (220) of said one or more paddles (220) having, with respect to the paddle rotational direction, a leading metal can engagement area (230) and a trailing plastic bottle engagement area (240), said engagement areas being angularly offset (α1, α2) from each other with respect to the rotational axis (A) and arranged to push the empty container (5) located in the feed-in area (120) towards the compression rollers (100); and
driving means (400) arranged to rotate the compression rollers (100) for obtaining a roller peripheral speed of the rollers (Vr), and arranged to rotate the paddle wheel (210) in said paddle rotational direction for obtaining a paddle peripheral speed of said one or more paddles (Vp), wherein a peripheral speed ratio (Vr/Vp) between the roller peripheral speed (Vr) and the paddle peripheral speed (Vp) is sufficiently large to ensure, during operation of the device (1), that a metal can (10) located in said feed-in area (120) is pushed by the leading can engagement area (230) of the paddle (220) towards the compression rollers (100) and pulled at least partly into the compression gap (110) before the trailing plastic bottle engagement area (240) of the paddle (220) has time to engage the metal can (10).

8. The device according to claim 7, wherein, with respect to the rotational axis (A) of the paddle wheel (210), the plastic bottle engagement area (240) is located at a radially outer end of the paddle (220), and the can engagement area (230) is located radially inwards on the paddle (220) in relation to the plastic bottle engagement area (240).

9. The device according to claim 7 or 8, wherein the metal can engagement area (230) comprises a rounded engagement area (225) presenting a convex engagement surface facing away from the rotational axis (A) of the paddle wheel (210).

10. The device according to claim 9, wherein the metal can engagement area (230) further comprises a planar engagement area (224) having a trailing end which transitions into the rounded engagement area (225), and having a leading end which is angularly offset from the trailing and is located at a smaller radius (r0) than the trailing end (r1).

11. The device according to any of claims 7 to 10, wherein said peripheral speed ratio (Vr/Vp) and said angularly offset (α1, α2) between the metal can engagement area (230) and the plastic bottle engagement area (240) are selected such that, during operation of the device (1), plastic bottles (20) are engaged both by the leading metal can engagement area (230) and by the trailing plastic bottle engagement area (240).

12. The device according to any one of claims 7 to 11, wherein the plastic bottle engagement area (240) includes at least one protruding gripping element (228) which protrudes at least in part in a radially outward direction with respect to the rotational axis (A) and which presents a free grip end (229) arranged to engage the plastic bottles (20).

13. The device according to claim 12, wherein the free grip end (229) of the plastic bottle engagement area (240) is formed at least in part by an edge of a radially outer free end of the paddle (220).

14. The device (1) according to any one of claims 7 to 13, wherein each paddle of said one or more paddles is formed by a single continuous paddle arm (220), and wherein the metal can engagement area (230) and the plastic bottle engagement area (240) of each paddle (220) are formed by different portions of said single paddle arm (220).

15. The device (1) according to claim 14, wherein said single paddle arm (220) is curved in a first direction towards the paddle rotational direction to define a curved engagement area (225) of the can engagement area (230), said curved engagement area (225) defining a transition between two planar portions (224, 226) of the single paddle arm (220) and presenting a convex engagement surface facing away from the rotational axis (A), and subsequently curved (227) in a second direction, opposite to the first direction, to form the plastic bottle engagement area (240) at an outer radial end portion (228, 229) of the single paddle arm (220).
